# EUROPEAN PATENT APPLICATION

(11) **EP 4 667 259 A1**
(43) Date of publication of application: **24.12.2025**
(21) Application number: 25180513.1
(22) Date of filing: 03.06.2025
(51) Int. Cl.: B60K 6/387, B60K 6/40, B60K 6/445, F16H 3/44, F16H 3/72, B60K 6/26, B60K 6/54, B60W 10/06, B60W 10/02, B60W 10/08, B60W 10/113, B60W 10/115, B60W 20/10, B60W 20/15, B60W 30/18

(54) **WORK VEHICLE**

(30) Priority: 21.06.2024 JP 2024100687
(71) Applicant: Kubota Corporation, Osaka-shi, Osaka 556-8601 (JP)
(72) Inventor: HIRASE, Yuji, SAKAI-SHI, OSAKA, 5900908 (JP); II, Tsunehiro, SAKAI-SHI, OSAKA, 5900908 (JP)
(74) Representative: Cabinet Beau de Loménie

(57) **Abstract**

A first transmission system (23,24f) transmits motive power from a motor (21), and a second transmission system (27,33) transmits motive power from the motor (21) to a travel device. A transmission device (24) receives motive power from an engine (5) and motive power from the first transmission system (23,24f), combines the received motive power, and transmits the combined motive power to the travel device as forward motive power. A switching device (25,26) can switch between a forward state in which motive power is transmitted from the transmission device (24) to the travel device and the travel device is driven forward, and a reverse state in which motive power is transmitted from the second transmission system (27,33) to the travel device and the travel device is driven in reverse.

## Description

### BACKGROUND OF THE INVENTION

### 1. Field of the Invention

The present invention relates to the configuration of a transmission system for travel in a work vehicle.

### 2. Description of the Related Art

Tractors are an example of a work vehicle, and there are hybrid tractors that, as disclosed in JP 2023-177846A, include a motor and a generator in addition to an engine, and motive power from the engine and motive power from the motor are transmitted to a transmission device and combined, and the combined motive power is transmitted from the transmission device to a travel device.

In JP 2023-177846A, a forward/reverse switching device is provided downstream of the transmission device, motive power from the transmission device is set to a forward state or a reverse state by the forward/reverse switching device, and therefore the work vehicle moves forward and in reverse.

### SUMMARY OF THE INVENTION

In JP 2023-177846A, the forward/reverse switching device has two clutches, a forward gear that transmits forward motive power, a reverse gear that transmits reverse motive power, and the like, and since the two clutches, the forward gear, the reverse gear, and the like are arranged next to each other along the front-rear direction, the forward/reverse switching device has a long length in the front-rear direction.

As a result, the case that houses the transmission device and the like tends to be long in the front-rear direction, and therefore there is room for improvement in terms of reducing the size of the case that houses the transmission device and the like.

An object of the present invention is to, in a hybrid work vehicle that includes a motor, a generator, and a transmission device, reduce the size of a case that houses the transmission device and the like.

A work vehicle according to an aspect of the present invention includes: a travel device; an engine; a battery; a motor configured to operate in a forward direction and a reverse direction; a generator configured to receive motive power from the engine; a first transmission system configured to transmit motive power from the motor; a second transmission system configured to transmit motive power from the motor to the travel device; a transmission device configured to receive motive power from the engine and motive power from the first transmission system, combine the received motive power, and transmit the combined motive power to the travel device as forward motive power; and a switching device switchable between (i) a forward state in which motive power is transmitted from the transmission device to the travel device and the travel device is driven forward, and (ii) a reverse state in which motive power is transmitted from the second transmission system to the travel device and the travel device is driven in reverse.

According to this aspect of the present invention, motive power from the motor is transmitted via the first transmission system, and motive power from the engine and motive power from the first transmission system are transmitted to the transmission device and combined in the transmission device. The combined motive power is transmitted to the travel device as forward motive power, and the work vehicle moves forward.

According to the above aspect of the present invention, the second transmission system that transmits motive power from the motor to the travel device is provided separately from the first transmission system. When reverse motive power is output from the motor, the reverse motive power is not transmitted to the transmission device, but rather bypasses the transmission device and is transmitted to the travel device by the second transmission system, and the work vehicle moves in reverse.

This makes it possible for the first transmission system and the transmission device to be arranged in parallel with the second transmission system in the left-right direction or the up-down direction, rather than being arranged in series in the front-rear direction.

According to the above aspect of the present invention, by arranging the first transmission system and the transmission device in parallel with the second transmission system, the front-rear length of the space required for providing the first transmission system, the transmission device, and the second transmission system is suppressed, thereby making it possible to reduce the size of the case that houses the transmission device and the like. By reducing the size of the case that houses the transmission device and the like, an increase in the weight of the work vehicle can be suppressed, thereby making it possible to improve the traveling performance of the work vehicle.

According to the above aspect of the present invention, the work vehicle moves in reverse using motive power from the motor, but since a work vehicle often performs work while moving forward, the frequency of moving in reverse is low and the distance moved in reverse is short, and therefore there is little disadvantage to the work vehicle moving in reverse using motive power from the motor.

In an aspect of the present invention, it is preferable that the switching device includes: a first clutch settable to (i) a transmission state in which the first clutch transmits motive power from the transmission device to the travel device and (ii) a disengaged state in which the first clutch does not transmit motive power from the transmission device; and a second clutch settable to (i) a transmission state in which the second clutch transmits motive power from the second transmission system to the travel device and (ii) a disengaged state in which the second clutch does not transmit motive power from the second transmission system.

According to this aspect of the present invention, when the first clutch is set to the transmission state and the second clutch is set to the disengaged state, combined motive power obtained by the transmission device is transmitted to the travel device via the first clutch, and the work vehicle moves forward without motive power from the motor being transmitted to the travel device via the second transmission system.

When the first clutch is set to the disengaged state and the second clutch is set to the transmission state, combined motive power obtained by the transmission device is not transmitted to the travel device. When reverse motive power is output from the motor, motive power from the motor is transmitted to the travel device via the second transmission system and the second clutch, and the work vehicle moves in reverse.

When the first clutch and the second clutch are set to the disengaged state, combined motive power from the transmission device and motive power from the second transmission system are not transmitted to the travel device, and the work vehicle stops.

As a result, by operating the first clutch and second clutch of the switching device to the transmission state and the disengaged state, the work vehicle can be easily set to a forward moving state, a reverse moving state, and a stopped state, thereby making it possible to improve the operability of the work vehicle.

In an aspect of the present invention, it is preferable that the work vehicle further includes: a motor gear mechanism configured to reduce a speed of motive power from the motor and transmit the speed-reduced motive power to the first transmission system and the second transmission system; and a generator gear mechanism configured to increase a speed of motive power from the engine and transmit the speed-increased motive power to the generator.

According to this aspect of the present invention, motive power from the motor is reduced in speed by the motor gear mechanism, transmitted from the first transmission system to the transmission device, and then transmitted to the travel device. Motive power from the motor is reduced in speed by the motor gear mechanism and transmitted from the second transmission system to the travel device.

As a result, by operating the motor in a high speed state, high-speed, low-torque power from the motor is converted into low-speed, high-torque power, thereby making it possible to increase the output of the motor without increasing the size of the core of the motor.

According to the above aspect of the present invention, motive power from the engine is increased in speed by the generator gear mechanism and transmitted to the generator, and the generator is driven to rotate at high speed. This makes it possible to increase the output of the generator without increasing the size of the core of the generator.

As a result, it is possible to increase the output of the motor and the generator while also suppressing an increase in the size of the case that houses the motor and the generator and suppressing an increase in cost for the motor and the generator, and this is advantageous in terms of improving the traveling performance of the work vehicle.

In an aspect of the present invention, it is preferable that the motor and the generator are each a motor generator.

According to this aspect of the present invention, the motor and the generator are each a motor generator, and therefore the motor can be operated as a generator, and the generator can be operated as a motor.

As a result, by operating the motor as a generator, the battery can be charged by power generated by the generator and by power generated by the motor (generator).

By operating the generator as a motor, motive power from the engine, motive power from the generator (motor), and motive power from the motor can be combined by the transmission device and transmitted to the travel device.

By operating the generator as a motor, motive power from the generator (motor) and motive power from the motor can be combined by the transmission device and transmitted to the travel device, without the transmission of motive power from the engine to the transmission device.

According to the present invention, by using motor generators as the motor and the generator, it is possible to be compatible with various travel states, which is advantageous in terms of improving the traveling performance of the work vehicle.

### BRIEF DESCRIPTION OF THE DRAWINGS

FIG. 1 is a left side view of a tractor.
FIG. 2 is a schematic view showing the inside of a clutch housing, a gear case, a motor case, and a transmission case.
FIG. 3 is a schematic view showing the inside of the clutch housing, the gear case, the motor case, and the transmission case in First Alternative Embodiment of Invention.
FIG. 4 is a schematic view showing the inside of the clutch housing, the gear case, the motor case, and the transmission case in Second Alternative Embodiment of Invention.

### DETAILED DESCRIPTION OF PREFERRED EMBODIMENTS

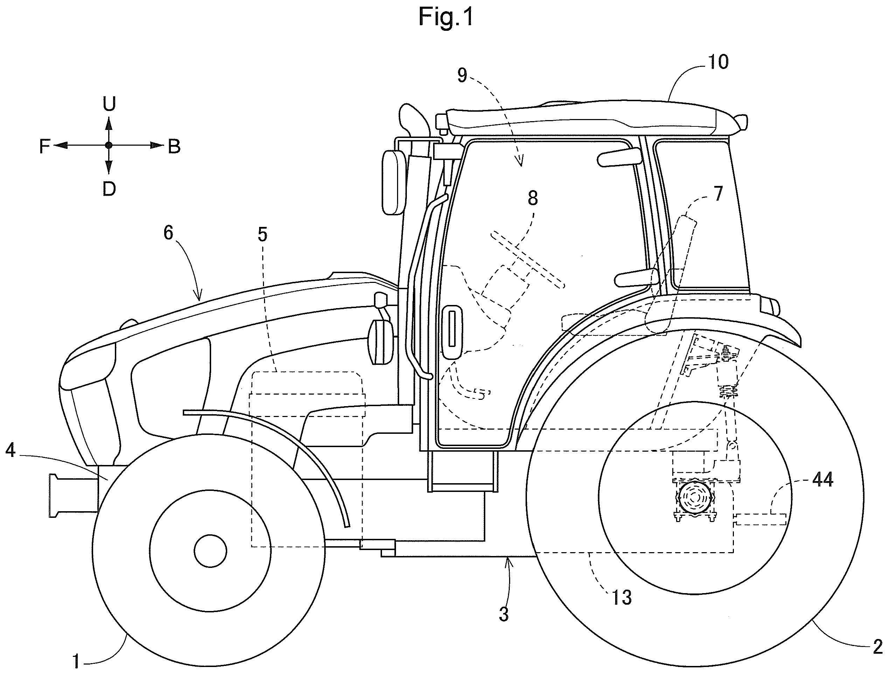

FIGS. 1 to 4 show a hybrid tractor, which is an example of a work vehicle. In FIGS. 1 to 4, F indicates the forward direction, B indicates the backward direction, U indicates the upward direction, and D indicates the downward direction.

### Overall configuration of tractor

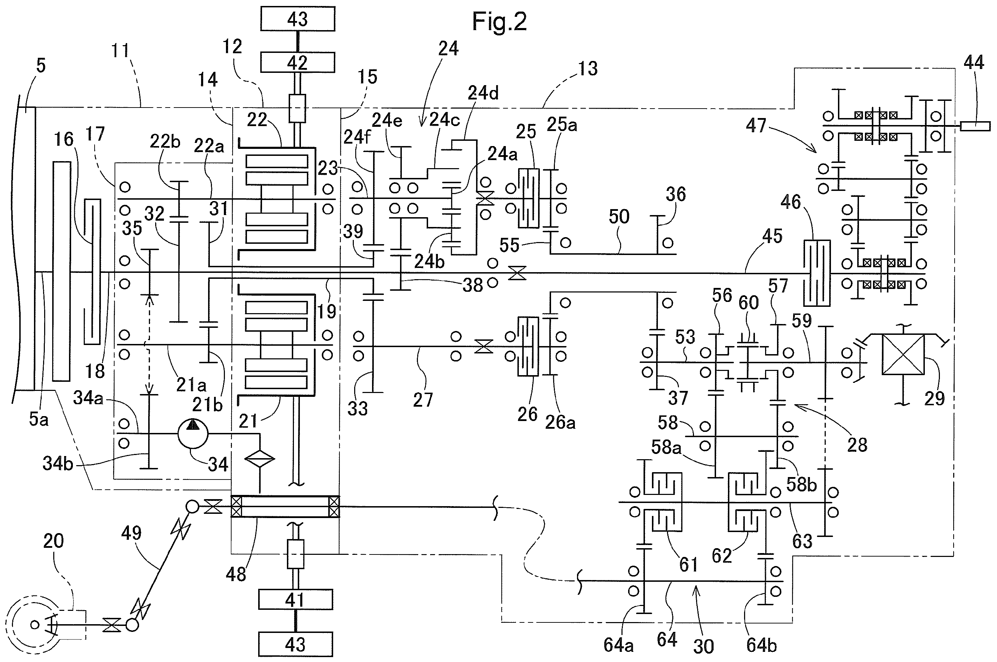

As shown in FIGS. 1 and 2, right and left front wheels 1 (corresponding to a travel device) are provided in a front portion of a body 3, right and left rear wheels 2 (also corresponding to a travel device) are provided in a rear portion of the body 3, and the body 3 is supported by the front wheels 1 and the rear wheels 2.

The body 3 includes, for example, an engine 5, a clutch housing 11 coupled to a rear portion of the engine 5, a motor case 12 coupled to a rear portion of the clutch housing 11, a transmission case 13 coupled to a rear portion of the motor case 12, and a front frame 4 coupled to a front portion of the engine 5. The front wheels 1 are mounted to the front frame 4, and the rear wheels 2 are mounted to a rear portion of the transmission case 13.

A bonnet 6 is provided in a front portion of the body 3, and the engine 5 is covered by the bonnet 6. A driver section 9 is provided in a rear portion of the body 3. The driver section 9 is covered by a cabin 10, and a driver seat 7 and a steering wheel 8 for steering the front wheels 1 are provided in the driver section 9.

### Overview of transmission system for front wheels 1 and rear wheels 2

As shown in FIG. 2, a first motor generator 21 (corresponding to a motor) and a second motor generator 22 (corresponding to a generator) are provided next to each other in the left-right direction inside the motor case 12. Using motive power from the engine 5, the first motor generator 21 mainly outputs motive power, and the second motor generator 22 mainly generates electricity. The first motor generator 21 and the second motor generator 22 are capable of operating in a forward direction and a reverse direction.

A planetary gear device 24 (corresponding to a transmission device), a transmission shaft 27 (corresponding to a second transmission system), a first clutch 25 (corresponding to a switching device), a second clutch 26 (corresponding to a switching device), an auxiliary transmission device 28, a rear wheel differential device 29, a front wheel transmission device 30, and the like are provided inside the transmission case 13.

### Internal configuration of clutch housing 11 and motor case 12

As shown in FIG. 2, the clutch housing 11 and the motor case 12 are an integrally formed component. A wall portion 14 separates the interior of the clutch housing 11 from the interior of the motor case 12. A front opening of the clutch housing 11 is closed by being connected to the engine 5. A wall portion 15 separates the interior of the motor case 12 from the interior of the transmission case 13.

A dry clutch 16 and a gear case 17 are provided inside the clutch housing 11, and the clutch 16 is connected to an output shaft 5a of the engine 5. A transmission shaft 18 is connected to the clutch 16, is arranged along the front-rear direction, and extends from the interior of the clutch housing 11, through the interior of the gear case 17 and the interior of the motor case 12, and into the interior of the transmission case 13. Motive power from the engine 5 is transmitted to the planetary gear device 24 via the clutch 16 and the transmission shaft 18, as will be described later.

The gear case 17 is attached to a portion of the wall portion 14 on the side opposite to the interior of the motor case 12. The interior of the gear case 17 is separated from the area inside the clutch housing 11 in which the clutch 16 is provided, and is separated from the interior of the motor case 12 by the wall portion 14.

A cylindrical transmission shaft 19 is arranged along the front-rear direction and extends through the interior of the transmission case 13 and the interior of the gear case 17, and into the interior of the motor case 12. A transmission shaft 18 is provided inside the transmission shaft 19, and the transmission shafts 18 and 19 can rotate independently of each other.

The first motor generator 21 and the second motor generator 22 are arranged next to each other in the left-right direction and provided on the right side and the left side inside the motor case 12. A transmission shaft 21a of the first motor generator 21 extends forward and enters the interior of the gear case 17. A transmission shaft 22a of the second motor generator 22 extends forward and enters the interior of the gear case 17.

### Configuration of motor gear mechanism

As shown in FIG. 2, inside the gear case 17, a transmission gear 31 (corresponding to a motor gear mechanism) is coupled to the transmission shaft 19. A transmission gear 21b (corresponding to a motor gear mechanism) is coupled to the transmission shaft 21a of the first motor generator 21. The transmission gear 31 and the transmission gear 21b of the first motor generator 21 are meshed with each other, and the transmission gear 31 has a larger diameter than the transmission gear 21b of the first motor generator 21.

Forward and reverse motive power from the first motor generator 21 (transmission shaft 21a) is reduced in speed via the transmission gear 21b and the transmission gear 31 of the first motor generator 21, and is transmitted to the transmission shaft 19.

### Configuration of generator gear mechanism

As shown in FIG. 2, inside the gear case 17, a transmission gear 32 (corresponding to a generator gear mechanism) is coupled to the transmission shaft 18. A transmission gear 22b (corresponding to a generator gear mechanism) is coupled to the transmission shaft 22a of the second motor generator 22. The transmission gear 32 and the transmission gear 22b of the second motor generator 22 are meshed with each other, and the transmission gear 32 has a larger diameter than the transmission gear 22b of the second motor generator 22.

Motive power from the engine 5 is increased in speed and transmitted from the transmission shaft 18 via the transmission gear 32 and the transmission gear 22b of the second motor generator 22 to the second motor generator 22 (transmission shaft 22a), and the second motor generator 22 thus generates electricity.

### Configuration of oil pump 34 for cooling first motor generator 21 and second motor generator 22

As shown in FIG. 2, lubricating oil having a relatively low viscosity is stored in the motor case 12. An oil pump 34 is provided at a lower portion inside the gear case 17. The oil pump 34 has a drive shaft 34a arranged along the front-rear direction, and a transmission gear 34b is coupled to the drive shaft 34a of the oil pump 34.

The transmission gear 35 is coupled to the transmission shaft 18, and the transmission gear 35 and the transmission gear 34b of the oil pump 34 are meshed with each other. Motive power from the engine 5 is transmitted to the oil pump 34 via the transmission shaft 18 and the transmission gear 35, thereby driving the oil pump 34.

When the oil pump 34 is driven, the lubricating oil in the motor case 12 is supplied to the oil pump 34, then supplied from the oil pump 34 through an oil cooler (not shown), and then supplied to the interior of the first motor generator 21 and the interior of the second motor generator 22. The first motor generator 21 and the second motor generator 22 are cooled by the supplied lubricating oil, and the lubricating oil returns from the first motor generator 21 and the second motor generator 22 to the motor case 12.

### Configuration of planetary gear device 24

As shown in FIG. 2, the planetary gear device 24 is provided in either one of a right portion and a left portion, in a front portion of the interior of the transmission case 13. The planetary gear device 24 includes, for example, an input shaft 23 (corresponding to a first transmission system), a sun gear 24a, a plurality of planetary gears 24b, a carrier 24c, a ring gear 24d, a transmission gear 24e, and a transmission gear 24f (corresponding to a first transmission system).

The input shaft 23 is arranged along the front-rear direction and extends forward, and the sun gear 24a and the transmission gear 24f are coupled to the input shaft 23. The transmission gear 24e is coupled to the carrier 24c. The planetary gears 24b are rotatably supported by the carrier 24c, the sun gear 24a is meshed with the planetary gears 24b, and the ring gear 24d is meshed with the planetary gears 24b.

A transmission gear 38 is coupled to the transmission shaft 18, and a transmission gear 39 is coupled to the transmission shaft 19. The transmission gear 24e of the planetary gear device 24 is meshed with the transmission gear 38, and the transmission gear 24f of the planetary gear device 24 is meshed with the transmission gear 39.

Motive power from the engine 5 (or motive power from the second motor generator 22) is transmitted to the carrier 24c of the planetary gear device 24 via the transmission shaft 18 and the transmission gear 38. Motive power from the first motor generator 21 is transmitted to the input shaft 23 (sun gear 24a) of the planetary gear device 24 via the transmission gear 31, the transmission shaft 19, and the transmission gear 39.

In the planetary gear device 24, motive power from the engine 5 (or motive power from the second motor generator 22) and motive power from the first motor generator 21 are combined and changed in speed. The first clutch 25 is provided behind the planetary gear device 24, and the ring gear 24d of the planetary gear device 24 is connected to the first clutch 25. Combined motive power obtained by the planetary gear device 24 is transmitted as forward motive power from the ring gear 24d of the planetary gear device 24 to the first clutch 25.

When the first motor generator 21 operates in the forward direction and the reverse direction, the transmission gear 31, the transmission shaft 19, the transmission gear 39, and the input shaft 23 and the sun gear 24a of the planetary gear device 24 are driven in the forward direction and the reverse direction. The ring gear 24d of the planetary gear device 24 is driven only in the forward direction by combined motive power from the planetary gear device 24.

### Configuration of transmission shaft 27

As shown in FIG. 2, the transmission shaft 27 is provided in the other one of the right portion and the left portion, in the front portion inside the transmission case 13, and is arranged along the front-rear direction. The planetary gear device 24 and the transmission shaft 27 are arranged next to each other in the left-right direction, and are provided on the right side and the left side in a front portion inside the transmission case 13.

A transmission gear 33 (corresponding to a second transmission system) is coupled to the transmission shaft 27, and the transmission gear 39 and the transmission gear 33 are meshed with each other. The second clutch 26 is provided behind the transmission shaft 27, and the transmission shaft 27 is connected to the second clutch 26. The first clutch 25 and the second clutch 26 are arranged next to each other in the left-right direction, and are provided on the right side and the left side in a front portion inside the transmission case 13.

When forward or reverse motive power is output from the first motor generator 21, the forward or reverse motive power from the first motor generator 21 is transmitted to the second clutch 26 via the transmission gear 31, the transmission shaft 19, the transmission gear 39, the transmission gear 33, and the transmission shaft 27.

### Operation state of first motor generator 21

As shown in FIG. 2, when the first clutch 25 is set to the transmission state, the second clutch 26 is set to the disengaged state, and the first motor generator 21 is operating, motive power from the engine 5 and motive power from the first motor generator 21 are transmitted to the planetary gear device 24 as described above, and combined motive power obtained by the planetary gear device 24 is transmitted to the first clutch 25 as forward motive power.

The forward motive power is transmitted via the first clutch 25 to the auxiliary transmission device 28 as described below, and is transmitted from the auxiliary transmission device 28 to the rear wheels 2 via the rear wheel differential device 29. Forward motive power branched off from a point between the auxiliary transmission device 28 and the rear wheel differential device 29 is transmitted to the front wheel transmission device 30 and then transmitted from the front wheel transmission device 30 to the front wheels 1 via the front wheel differential device 20.

The work vehicle thus moves forward. The speed change range of the combined motive power obtained by the planetary gear device 24 corresponds to a relatively high-speed forward range.

When the first clutch 25 is set to the disengaged state, the second clutch 26 is set to the transmission state, and the first motor generator 21 outputs reverse motive power, the reverse motive power from the first motor generator 21 is transmitted from the transmission shaft 27 to the second clutch 26 as described above.

The reverse motive power is transmitted via the second clutch 26 to the auxiliary transmission device 28 as described below, and is transmitted from the auxiliary transmission device 28 to the rear wheels 2 via the rear wheel differential device 29. Reverse motive power branched off from a point between the auxiliary transmission device 28 and the rear wheel differential device 29 is transmitted to the front wheel transmission device 30 and then transmitted from the front wheel transmission device 30 to the front wheels 1 via the front wheel differential device 20.

The work vehicle thus moves in reverse. The speed change range of the reverse motive power transmitted from the first motor generator 21 via the second clutch 26 corresponds to a relatively low-speed reverse range.

When the first clutch 25 is set to the disengaged state, the second clutch 26 is set to the transmission state, and the first motor generator 21 outputs forward motive power, similarly to the description given above, the forward motive power from the first motor generator 21 is transmitted from the transmission shaft 27 to the second clutch 26, and transmitted to the rear wheels 2 via the auxiliary transmission device 28 and the rear wheel differential device 29, and then transmitted to the front wheels 1 via the front wheel transmission device 30 and the front wheel differential device 20.

The work vehicle thus moves forward. The speed change range of the forward motive power transmitted from the first motor generator 21 via the second clutch 26 corresponds to a relatively low-speed forward range.

When the first clutch 25 and the second clutch 26 are set to the disengaged state, combined motive power from the planetary gear device 24 and motive power from the first motor generator 21 are not transmitted to the auxiliary transmission device 28, and the work vehicle stops.

### Configurations related to first motor generator 21 and second motor generator 22

As shown in FIG. 2, a first inverter 41 is provided for the first motor generator 21, a second inverter 42 is provided for the second motor generator 22, and a battery 43 is provided.

When the first motor generator 21 (second motor generator 22) operates as a motor to supply motive power to the transmission shaft 18 (transmission shaft 19), DC power from the battery 43 is converted to AC power by the first inverter 41 (second inverter 42) and supplied to the first motor generator 21 (second motor generator 22), and the first motor generator 21 (second motor generator 22) operates as a motor (drive mode).

When the first motor generator 21 (second motor generator 22) is driven to operate as a generator, AC power generated by the first motor generator 21 (second motor generator 22) is converted to DC power by the first inverter 41 (second inverter 42), and the battery 43 is charged (regeneration mode). Note that a capacitor (not shown) may be used as the battery 43.

Based on the state of a working device (not shown) attached to the body 3, the travel state of the body 3, and the like, a control device (not shown) sets the first motor generator 21 to the regeneration mode or the drive mode and sets the second motor generator 22 to the regeneration mode or the drive mode.

The basic travel state is a state in which the first motor generator 21 is set to the drive mode and the second motor generator 22 is set to the regeneration mode.

In the basic travel state, motive power from the engine 5 and motive power from the first motor generator 21 are transmitted to the planetary gear device 24. Motive power from the first motor generator 21 is transmitted to the transmission shaft 27.

By setting the clutch 16 to the disengaged state, it is also possible to stop the engine 5 and travel forward with the first motor generator 21 in the drive mode and the second motor generator 22 in the drive mode.

### Configuration of transmission system for PTO shaft 44

As shown in FIG. 2, inside the transmission case 13, a transmission shaft 45 is coupled to the transmission shaft 18, and a PTO clutch 46 is connected to the transmission shaft 45. A PTO transmission device 47 is provided, and a PTO shaft 44 is provided in a rear portion of the transmission case 13 (see FIG. 1).

Motive power from the engine 5 is transmitted to the PTO transmission device 47 via the clutch 16, the transmission shafts 18 and 45, and the PTO clutch 46, and then transmitted from the PTO transmission device 47 to the PTO shaft 44. When a work device (not shown) is coupled to a rear portion of the body 3, a transmission shaft (not shown) is connected to the PTO shaft 44 and the work device in order to transmit motive power from the PTO shaft 44 to the work device.

### Configuration of junction of forward motive power and reverse motive power

As shown in FIG. 2, a cylindrical transmission shaft 50 is rotatably attached to the transmission shaft 45, and a transmission gear 55 and a transmission gear 36 are coupled to the transmission shaft 50. The transmission gear 55 is meshed with a transmission gear 25a of the first clutch 25, and the transmission gear 55 is meshed with a transmission gear 26a of the second clutch 26.

As described above, combined motive power obtained by the planetary gear device 24 is transmitted from the planetary gear device 24 and the first clutch 25 to the transmission shaft 50 as forward motive power. As described above, forward and reverse motive power generated by the first motor generator 21 is transmitted from the transmission shaft 27 and the second clutch 26 to the transmission shaft 50.

### Configuration of auxiliary transmission device 28

As shown in FIG. 2, the auxiliary transmission device 28 includes a transmission shaft 53, a transmission gear 37, a high-speed gear 56, a low-speed gear 57, a transmission shaft 58, a rear wheel output shaft 59, a shift member 60, and the like.

The transmission gear 37 and the high-speed gear 56 are coupled to the transmission shaft 53, and the transmission gear 36 and the transmission gear 37 are meshed with each other. Combined motive power obtained by the planetary gear device 24 is transmitted from the transmission shaft 50 to the transmission shaft 53 as forward motive power. Forward and reverse motive power generated by the first motor generator 21 is transmitted from the transmission shaft 50 to the transmission shaft 53.

The high-speed gear 56 is meshed with a transmission gear 58a of the transmission shaft 58. The rear wheel output shaft 59 is provided concentrically with the transmission shaft 53, and the shift member 60 is slidably attached to the rear wheel output shaft 59. The low-speed gear 57 is rotatably attached to the rear wheel output shaft 59, and the low-speed gear 57 is meshed with a transmission gear 58b of the transmission shaft 58.

When the shift member 60 is engaged with the high-speed gear 56, the transmission shaft 53 and the rear wheel output shaft 59 are coupled to each other, and forward (reverse) motive power from the transmission shaft 53 is transmitted to the rear wheel output shaft 59 in a high speed state, and then from the rear wheel output shaft 59 to the rear wheels 2 via the rear wheel differential device 29.

When the shift member 60 is engaged with the low-speed gear 57, forward (reverse) motive power from the transmission shaft 53 is transmitted to the rear wheel output shaft 59 in a low speed state via the high-speed gear 56, the transmission shaft 58, and the low-speed gear 57, and then from the rear wheel output shaft 59 to the rear wheels 2 via the rear wheel differential device 29.

### Configuration of front wheel transmission device 30

As shown in FIG. 2, the front wheel transmission device 30 includes a standard clutch 61, a speed increasing clutch 62, a transmission shaft 63, a front wheel output shaft 64, and the like.

The standard clutch 61 and the speed increasing clutch 62 are attached to the transmission shaft 63, and forward (reverse) motive power from the rear wheel output shaft 59 is transmitted to the transmission shaft 63. The output gear of the standard clutch 61 is meshed with a transmission gear 64a of the front wheel output shaft 64, and the output gear of the speed increasing clutch 62 is meshed with a transmission gear 64b of the front wheel output shaft 64.

A cylindrical partition portion 48 extends between the wall portion 14 and the wall portion 15 inside the motor case 12. The front wheel output shaft 64 passes through the partition portion 48 from inside the transmission case 13 and projects forward, and the transmission shaft 49 extends between the front wheel differential device 20 and the front wheel output shaft 64.

Lubricating oil is stored in the transmission case 13, and the lubricating oil can travel back and forth between the transmission case 13 and the gear case 17 by passing through the partition portion 48. The lubricating oil for the motor case 12 is different from the lubricating oil for the transmission case 13 and the gear case 17.

The interior of the motor case 12 and the interior of the gear case 17 are separated by the wall portion 14, the interior of the motor case 12 and the interior of the transmission case 13 are separated by the wall portion 15, and the area inside the partition portion 48 is separated from the interior of the motor case 12, and therefore the lubricating oil in the motor case 12 does not mix with the lubricating oil in the transmission case 13 and the gear case 17.

When the work vehicle travels forward or in reverse, while the front wheels 1 are steered within a set angle range to the right or left from the straight ahead position, the standard clutch 61 is set to the transmission state.

Forward (reverse) motive power from the rear wheel output shaft 59 is transmitted to the front wheel output shaft 64 via the transmission shaft 63 and the standard clutch 61, and then transmitted to the front wheels 1 via the transmission shaft 49 and the front wheel differential device 20, and therefore the front wheels 1 and rear wheels 2 are driven at the same speed.

When the work vehicle travels forward, if the front wheels 1 are steered to the right or left beyond right and left set angles, the speed increasing clutch 62 is set to the transmission state.

Forward motive power from the rear wheel output shaft 59 is transmitted to the front wheel output shaft 64 via the transmission shaft 63 and the speed increasing clutch 62, and then transmitted to the front wheels 1 via the transmission shaft 49 and the front wheel differential device 20, and therefore the front wheels 1 are driven at a higher speed than the rear wheels 2.

### First Alternative Embodiment of Invention

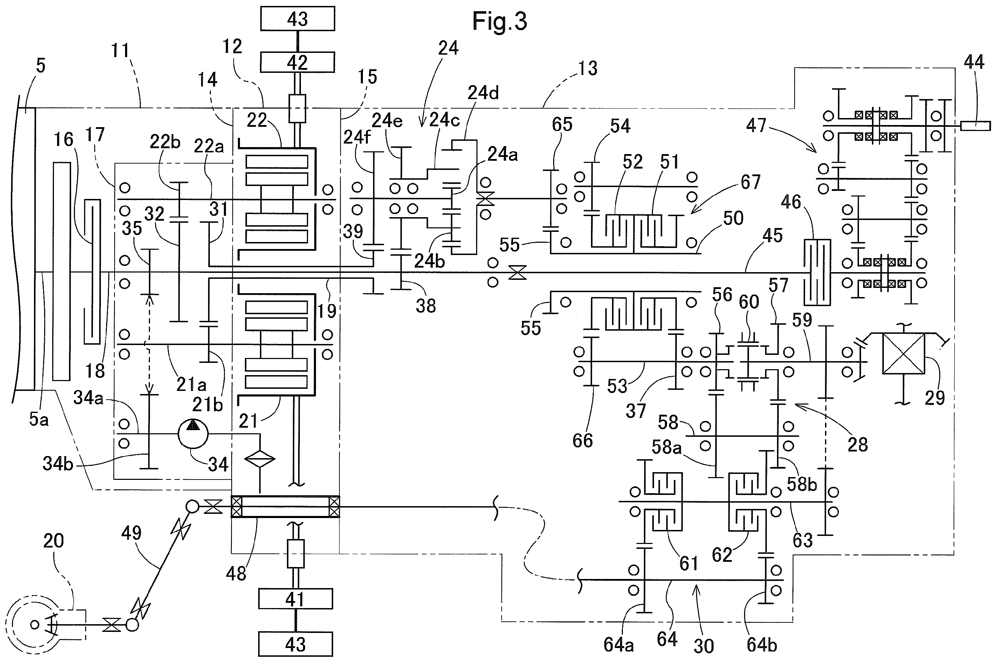

FIG. 3 shows a configuration in which the transmission shaft 27, the transmission gear 33, the first clutch 25, the second clutch 26, and the like shown in FIG. 2 are omitted, and a forward/reverse switching device 67 is provided.

As shown in FIG. 3, the transmission gear 36 of the transmission shaft 50 (see FIG. 2) is omitted, and the transmission gear 55 of the transmission shaft 50 is meshed with a transmission gear 65 coupled to the ring gear 24d of the planetary gear device 24. Combined motive power obtained by the planetary gear device 24 is transmitted to the transmission shaft 50 via the transmission gear 65 and the transmission gear 55.

The forward/reverse switching device 67 includes a forward clutch 51, a reverse clutch 52, an intermediate gear 54, and the like. The forward clutch 51 and the reverse clutch 52 are attached to the transmission shaft 50. The output gear of the forward clutch 51 is meshed with the transmission gear 37 of the transmission shaft 53. A transmission gear 66 is coupled to the transmission shaft 53, the output gear of the reverse clutch 52 is meshed with the intermediate gear 54, and the intermediate gear 54 is meshed with the transmission gear 66.

When the forward clutch 51 is set to the transmission state, motive power from the transmission shaft 50 is transmitted in a forward state to the transmission shaft 53 via the forward clutch 51, and then transmitted from the transmission shaft 53 to the auxiliary transmission device 28. The work vehicle thus moves forward.

When the reverse clutch 52 is set to the transmission state, motive power from the transmission shaft 50 is transmitted in a reverse state to the transmission shaft 53 via the reverse clutch 52 and the intermediate gear 54, and then transmitted from the transmission shaft 53 to the auxiliary transmission device 28. The work vehicle thus moves in reverse.

### Second Alternative Embodiment of Invention

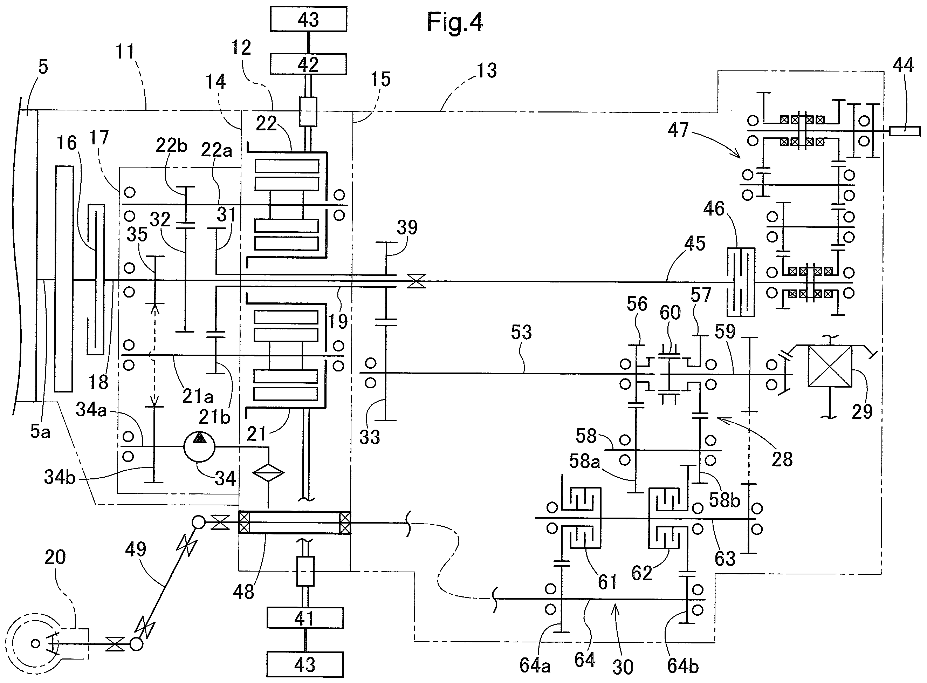

FIG. 4 shows a configuration in which the planetary gear device 24, the transmission shaft 27, the first clutch 25, the second clutch 26, the transmission shaft 50, the transmission gears 36 and 55, and the like shown in FIG. 2 are omitted. In the configuration shown in FIG. 4, the first motor generator 21 operates in a forward direction and a reverse direction.

As shown in FIG. 4, the transmission gear 33, which is meshed with the transmission gear 39 (see FIG. 2), is coupled to the transmission shaft 53.

When the first motor generator 21 outputs forward motive power, the forward motive power of the first motor generator 21 is transmitted to the auxiliary transmission device 28 via the transmission gear 31, the transmission shaft 19, the transmission gear 39, the transmission gear 33, and the transmission shaft 53. The work vehicle thus moves forward.

When the first motor generator 21 outputs reverse motive power, the reverse motive power of the first motor generator 21 is transmitted to the auxiliary transmission device 28 via the transmission gear 31, the transmission shaft 19, the transmission gear 39, the transmission gear 33, and the transmission shaft 53. The work vehicle thus moves in reverse.

### Third Alternative Embodiment of Invention

In the configuration shown in FIG. 2, a configuration is possible in which when the first clutch 25 is set to the disengaged state and the second clutch 26 is set to the transmission state, the first motor generator 21 outputs reverse motive power and does not output forward motive power.

### Fourth Alternative Embodiment of Invention

In the configuration shown in FIG. 2, the first clutch 25 may be provided between the transmission gear 39 and the transmission gear 24f of the planetary gear device 24, and the second clutch 26 may be provided between the transmission gear 39 and the transmission gear 33.

In the above-described configuration, when the first clutch 25 is set to the transmission state, motive power from the first motor generator 21 is transmitted to the transmission gear 24f of the planetary gear device 24 via the transmission gear 31, the transmission shaft 19, the transmission gear 39, and the first clutch 25.

When the second clutch 26 is set to the transmission state, motive power from the first motor generator 21 is transmitted to the transmission gear 33 and the transmission shaft 27 via the transmission gear 31, the transmission shaft 19, the transmission gear 39, and the second clutch 26.

### Fifth Alternative Embodiment of Invention

In the configuration shown in FIG. 2, the planetary gear device 24 and the first clutch 25 may be provided in an upper portion inside the transmission case 13, and the transmission shaft 27 and the second clutch 26 may be provided in a lower portion inside the transmission case 13.

The planetary gear device 24 and the first clutch 25 may be provided in a lower portion inside the transmission case 13, and the transmission shaft 27 and the second clutch 26 may be provided in an upper portion inside the transmission case 13.

According to the above-mentioned configuration, the planetary gear device 24 and the first clutch 25 are aligned with the transmission shaft 27 and the second clutch 26 in the up-down direction.

### Correspondence with claims: 1

A work vehicle includes a travel device (front wheels 1, rear wheels 2), an engine 5, and a battery 43.

The work vehicle further includes a motor (first motor generator 21) configured to operate in a forward direction and a reverse direction, and a generator (second motor generator 22) configured to receive motive power from the engine 5.

The work vehicle further includes a first transmission system (input shaft 23, transmission gear 24f) configured to transmit motive power from the motor (first motor generator 21).

The work vehicle further includes a second transmission system (transmission shaft 27, transmission gear 33) configured to transmit motive power from the motor (first motor generator 21) to the travel device (front wheels 1, rear wheels 2).

The work vehicle further includes a transmission device (planetary gear device 24) configured to receive motive power from the engine 5 and motive power from the first transmission system (input shaft 23, transmission gear 24f), combine the received motive power, and transmit the combined motive power to the travel device (front wheels 1, rear wheels 2) as forward motive power.

The work vehicle further includes a switching device (first clutch 25, second clutch 26) switchable between a forward state in which motive power is transmitted from the transmission device (planetary gear device 24) to the travel device (front wheels 1, rear wheels 2) and the travel device is driven forward, and a reverse state in which motive power is transmitted from the second transmission system (transmission shaft 27, transmission gear 33) to the travel device (front wheels 1, rear wheels 2) and the travel device is driven in reverse.

### Correspondence with claims: 2

The switching device (first clutch 25, second clutch 26) includes: a first clutch 25 settable to a transmission state in which motive power from the transmission device (planetary gear device 24) is transmitted to the travel device (front wheels 1, rear wheels 2), and a disengaged state in which motive power is not transmitted from the transmission device (planetary gear device 24); and a second clutch 26 settable to a transmission state in which motive power from the second transmission system (transmission shaft 27, transmission gear 33) is transmitted to the travel device (front wheels 1, rear wheels 2), and a disengaged state in which in which motive power is not transmitted from the second transmission system (transmission shaft 27, transmission gear 33).

### Correspondence with claims: 3

The work vehicle further includes a motor gear mechanism (transmission gear 21b, transmission gear 31) configured to reduce a speed of motive power from the motor (first motor generator 21) and transmit the speed-reduced motive power to the first transmission system (input shaft 23, transmission gear 24f) and the second transmission system (transmission shaft 27, transmission gear 33).

The work vehicle further includes a generator gear mechanism (transmission gear 22b, transmission gear 32) configured to increase a speed of motive power from the engine 5 and transmit the speed-increased motive power to the generator (second motor generator 22).

The motor (first motor generator 21) and the generator (second motor generator 22) are each a motor generator.

### INDUSTRIAL APPLICABILITY

The present invention is applicable not only to tractors, but also to work vehicles that carry and transport cargo, work vehicles that tow carts or the like, and construction work vehicles such as wheel loaders, and is also applicable to work vehicles equipped with a crawler-type travel device instead of the front wheels 1 and rear wheels 2.

### DESCRIPTION OF REFERENCE SIGNS

- 1: Front wheel (travel device)
- 2: Rear wheel (travel device)
- 5: Engine
- 21: First motor generator (motor) (motor generator)
- 21b: Transmission gear (motor gear mechanism)
- 22: Second motor generator (generator) (motor generator)
- 22b: Transmission gear (generator gear mechanism)
- 23: Input shaft (first transmission system)
- 24: Planetary gear device (transmission device)
- 24f: Transmission gear (first transmission system)
- 25: First clutch (switching device)
- 26: Second clutch (switching device)
- 27: Transmission shaft (second transmission system)
- 31: Transmission gear (motor gear mechanism)
- 32: Transmission gear (generator gear mechanism)
- 33: Transmission gear (second transmission system)
- 43: Battery

## Claims

1. A work vehicle comprising:
a travel device (1,2);
an engine (5);
a battery (43);
a motor (21) configured to operate in a forward direction and a reverse direction;
a generator (22) configured to receive motive power from the engine;
a first transmission system (23,24f) configured to transmit motive power from the motor;
a second transmission system (27,33) configured to transmit motive power from the motor to the travel device;
a transmission device (24) configured to receive motive power from the engine and motive power from the first transmission system, combine the received motive power, and transmit the combined motive power to the travel device as forward motive power; and
a switching device (25,26) switchable between (i) a forward state in which motive power is transmitted from the transmission device to the travel device and the travel device is driven forward, and (ii) a reverse state in which motive power is transmitted from the second transmission system to the travel device and the travel device is driven in reverse.

2. The work vehicle according to claim 1,
wherein the switching device includes:
a first clutch (25) settable to (i) a transmission state in which the first clutch transmits motive power from the transmission device (24) to the travel device (1,2) and (ii) a disengaged state in which the first clutch does not transmit motive power from the transmission device; and
a second clutch (26) settable to (i) a transmission state in which the second clutch transmits motive power from the second transmission system (27,33) to the travel device (1,2) and (ii) a disengaged state in which the second clutch does not transmit motive power from the second transmission system.

3. The work vehicle according to claim 1 or 2, further comprising:
a motor gear mechanism (21b,31) configured to reduce a speed of motive power from the motor (21) and transmit the speed-reduced motive power to the first transmission system (23,24f) and the second transmission system (27,33); and
a generator gear mechanism (22b,32) configured to increase a speed of motive power from the engine (5) and transmit the speed-increased motive power to the generator (22).

4. The work vehicle according to any one of claims 1 to 3,
wherein the motor (21) and the generator (22) are each a motor generator.

5. The work vehicle according to claim 1,
wherein the transmission device (24) is a planetary gear device that combines motive power from the engine (5) and motive power from the motor (21) and changes a speed of the combined motive power.

6. The work vehicle according to claim 5,
wherein the planetary gear device (24) includes:
an input shaft (23) and a sun gear (24a) configured to receive motive power from the motor (21); and
a transmission gear (24f) coupled to the sun gear and the input shaft, and
the first transmission system is constituted by the input shaft (23) and the transmission gear (24f).
